# EUROPÄISCHE PATENTSCHRIFT

(11) **EP 0 589 299 B1**
(45) Veröffentlichungstag und Bekanntmachung des Hinweises auf die Patenterteilung: **12.03.1997**
(21) Anmeldenummer: 93114530.4
(22) Anmeldetag: 10.09.1993
(51) Int. Cl.: B62D 1/18

(54) **Lenkanordnung für Kraftfahrzeuge**
Steering arrangement for motor cars
Dispositif de direction pour véhicules automobiles

(30) Priorität: 21.09.1992 DE 4231497
(43) Veröffentlichungstag der Anmeldung: 30.03.1994
(73) Patentinhaber: ADAM OPEL AG, 65423 Rüsselsheim (DE); General Motors Espana, S.A., Figueruelas (Zaragoza) (ES)
(72) Erfinder: Polster, Michael, Dipl.-Ing., D-62199 Wiesbaden (DE); Rick, Ulrich, Dipl.-Ing., D-55595 Roxheim (DE); Monetha, Eugen, Ing. grad., D-65428 Rüsselsheim (DE)
(74) Vertreter: Bergerin, Ralf, Dipl.-Ing.

(56) Entgegenhaltungen:
- EP-A- 0 440 898
- EP-A- 0 448 246
- DE-A- 2 625 756
- DE-A- 3 619 540
- DE-A- 4 118 227
- DE-B- 2 160 308
- DE-C- 3 642 437
- US-A- 4 355 820
- US-A- 4 682 788
- SOVIET PATENTS ABSTRACTS, P,Q Sektion, Woche 9316, 09. Juni 1993 DERWENT PUBLICATIONS LTD., London

## Beschreibung

Die Erfindung betrifft eine Lenkanordnung nach dem Oberbegriff des Anspruches 1.

Derartige Lenkanordnungen werden insbesondere bei Kraftfahrzeugen eingesetzt, um das Eindringen der Lenksäule in den Innenraum des Kraftfahrzeuges im Falle eines Zusammenstoßes zu begrenzen oder die Übertragung von Schwingungen, die im Fahrbetrieb entstehen, auf die Lenksäule, insbesondere das Lenkrad, zu vermeiden.

Eine derartige Lenkanordnung ist aus der DE 36 19 540 A1 bekannt, bei der die Lenksäule nahe des Lenkrades an einem Halteteil des Fahrzeuges befestigt ist, wobei ein oder mehrere auf Zug beanspruchbare Stützelemente zwischen dem Halteteil und einem crashfesten Bereich des Fahrzeugbodens vorgesehen sind. Diese auf Zug beanspruchbaren Stützelemente sollen im wesentlichen bei einem Aufprall mit Stirnwandrückverschiebung ein Hochdrehen und ein seitliches Verschwenken des Lenkrads verhindern.

Aus der EP-OS 0 440 898 ist eine Lenkanordnung der genannten Art bekannt, bei der zur Vermeidung des Lenkradzitterns in kritischen Geschwindigkeitsbereichen die Lenksäule in Querrichtung des Fahrzeuges verschiebbar an der Halterung (Lenkkonsole) angeordnet ist und das Mantelrohr der Lenksäule über ein mit ihm fest verbundenes Abstützelement an ein große Impedanz aufweisendes Aufbauteil (Längstunnel) angeschlossen ist. Durch die Entkoppelung von Lenkkonsole und Mantelrohr kann sich die Lenkkonsole in Querrichtung relativ zum Mantelrohr bewegen, wodurch keine Schwingungen des Vorderwagens in dieser Richtung über die Konsole an die Lenksäule bzw. das Mantelrohr übertragen werden.

Eine weitere gattungsgemäße Lenkanordnung, bei der zur Erhöhung der Biegemomentsteifigkeit die Halterung der Lenksäule unterhalb der Lenkwelle zusätzlich über ein auf Zug beanspruchtes Glied (Seil) mit einem crashfesten Bereich des Fahrzeuges verbunden ist, beschreibt die DE-OS 26 25 756. Mit diesen Maßnahmen soll bei einem Aufprall die Bewegung der Lenkwelle in Richtung nach hinten in den Fahrgastraum verhindert werden.

Es hat sich jedoch gezeigt, daß bei den bekannten Konstruktionen mit fest an der Halterung bzw. Lenksäule angeordneten Stützelementen zunehmend Toleranzprobleme bei der Befestigung der Stützelemente auftreten. Die Befestigungsenden der Stützelemente oder die karosserieseitigen Anbindungspukte müssen zum Beispiel zum Ausgleich der Herstellungs- bzw. Montagetoleranzen mit großen Bohrungen bzw. Langlöchern versehen werden und darüberhinaus ist noch oft bei der Montage ein Nachbiegen der Stützelemente erforderlich. Durch die feste Verbindung der Stützelemente mit der Lenksäule werden eigene bzw. karosserieseitige Anregungen vom Fahrbetrieb auf die Lenksäule und damit auf das Lenkrad übertragen, was sich auf den Fahrkomfort nachteilig auswirkt.

Der Erfindung liegt die Aufgabe zugrunde, eine Lenkanordnung der eingangs genannten Art derart zu gestalten, daß die beim Einbau der Stützelemente auftretenden Toleranzen konstruktiv unaufwendig und mit einfachen Mitteln ausgeglichen werden sowie keine zusätzlichen Schwingungen und Geräusche über die Stützelemente auf die Lenksäule übertragen werden.

Gelöst wird diese Aufgabe durch die kennzeichnenden Merkmale des Patentanspruchs 1. Vorteilhafte Weiterbildungen der Erfindung sind in den Unteransprüchen angegeben.

Die mit der Erfindung erzielten Vorteile bestehen hauptsächlich darin, daß die an der Halterung elastisch gelagerten Stützelemente jeweils um den Befestigungspunkt an der Halterung schwenken können. Dadurch können Herstellungs- und Montagetoleranzen, insbesondere Winkelungenauigkeiten, bei der Befestigung der Stützelemente ausgeglichen und ein verhältnismäßig sattes und spannungsfreies Aufliegen der korrespondierenden Flächen erreicht werden.

Besonders einfach kann eine schwingungsmäßig entkoppelte und schwenkbare Befestigung erreicht werden, wenn gemäß einer vorteilhaften Ausgestaltung der Erfindung die Stützelemente mittels elastischer Buchsen gelagert sind. Als elastische Buchsen können z. B. Gummibuchsen verwendet werden. Diese können wie üblich zwischen dem Stützelement und der Halterung oder auch beidseitig des Stützelementes angeordnet sind. Dadurch werden karosserieseitige Anregungen und Geräusche nicht an die Lenksäule weitergeleitet. Die notwendige Vorspannung des Gummielementes, die eine Schwenkung des Stützelementes zulassen, kann durch übliche bauliche Maßnahmen wie z. B. Abstandsbuchsen usw. bewerkstelligt werden.

Die Anbindung mittels elastischer Buchsen kann noch weiter vereinfacht werden, wenn die elastischen Buchsen aus Kunststoff, insbesondere aus termoplastischem Elastomer wie z. B. Polyurethan oder Polyamid, bestehen. Diese Werkstoffe weisen bei einer mittleren Härte eine für die schwenkbare Befestigung notwendige Elastizität und Festigkeit auf und können direkt im abgeflachten Endbereich des Stützelementes, z. B. in eine Bohrung, eingesetzt werden. Dabei werden keine weiteren zusätzlichen Mittel wie z. B. Abstandsbuchsen zur Vorspannung des Kunststoffes benötigt.

In Abhängigkeit von Einbauverhältnissen im Kraftfahrzeug, den Transportbedingungen und der Montage kann die Einbaubreite einer vormontierten Lenkanordnung dadurch reduziert werden, daß die Schwenkachse des Stützelementes in Fahrzeuglängsrichtung verläuft, wobei das Stützelement in Fahrzeugquerrichtung, z. B. zur Lenksäule, geschwenkt wird.

Die erfindungsmäßige Lenkanordnung kann sehr einfach hergestellt und in das Kraftfahrzeug eingebaut werden, wenn die Schwenkachse des Stützelementes gemäß einer weiteren Ausbildungsform in Fahrzeugquerrichtung verläuft. Dabei werden insbesondere die Herstellungs- und Montagetoleranzen in der Längsrichtung des Kraftfahrzeuges aufgefangen.

Eine bessere Abstützung der Lenksäule im Falle eines Zusammenstoßes kann dadurch erreicht werden, daß die Halterung zwei beidseitig der Lenksäule angeordnete Stützelemente aufweist. Das der Fahrzeugmitte zugewandte Stützelement kann z. B. mit dem Längstunnel und das der Fahrzeugaußenseite zugewandte Stützelement z. B. mit der A-Säule des Kraftfahrzeuges fest verbunden sein. Durch die auf diese Weise erreichte höhere Steifigkeit der Lenksäule können bei dieser Weiterbildung der Lenkanordnung Schwingungen der Lenksäule oder das sogenannte Lenkradzittern vermieden werden.

Zur Vereinfachung der Montage können die Stützelemente an einem in Fahrzeugquerrichtung angeordnetem und mit der Halterung verbundenem Lagerelement befestigt werden, das an seinen beiden Enden Gewindeabschnitte zur Aufnahme der Stützelemente aufweist. Das Lagerelement kann durch Schweißen, Fressen, Schrauben oder mittels elastischer Elemente mit der Halterung der Lenksäule verbunden sein.

Die Sicherheit und der Komfort beim Betrieb des Kraftfahrzeuges können weiter erhöht werden, wenn sich die Stützelemente an beiden auf der rechten und linken Seiten des Kraftfahrzeuges angeordneten A-Säulen sowie am Längstunnel des Kraftfahrzeuges abstützen. Dabei kann sich das der Fahrzeugmitte zugewandte Stützelement z. B gleichzeitig am Längstunnel des Kraftfahrzeuges und an der A-Säule auf der Beifahrerseite abstützen, indem es im Bereich der elastischen Befestigung an der Halterung mit einem annähernd in Fahrzeugquerrichtung verlaufenden weiteren Stützelement verbunden wird.

In einer alternativen Ausführungsform der Erfindung kann das Stützelement allseitig schwenkbar an der Halterung angeordnet sein. Für eine derartige Befestigung des Stützelementes eignen sich besonders an sich bekannte Kugelgelenke, deren Lagerschalenhälften aus elastischem Kunststoff oder einem anderen elastischen Werkstoff bestehen. Diese Ausführung erlaubt dem Stützelement eine größere Schwenkfreiheit und kann z. B. eine Teilevielfalt beim Einbau in verschiedene Modelle mit unterschiedlichen Einbauverhältnissen vermeiden.

Eine vorteilhafte Abstützung der Lenksäule wird dadurch erreicht, daß mindestens ein Stützelement in einer Ebene annähernd senkrecht der Mittelachse der Lenksäule angeordnet ist. Durch diese direkte Verbindung mit der Karosserie, z. B. dem Längstunnel, wird im Falle eines frontalen Zusammenstoßes die Lenksäule mit dem Lenkrad bei einer Verlagerung nach hinten gezielt geführt und zwar in einer Richtung, die annähernd der Fahrzeuglängsrichtung entspricht, und wirksam gegen eine Schwenkung um die Halterung nach oben abgestützt.

Die notwendige Steifigkeit des Stützelementes kann dadurch erreicht werden, daß das Stützelement aus einem metallischen Profilstab besteht. Der Querschnitt des Profilstabs kann ein geschlossenes, offenes oder rohrförmiges Profil aufweisen, wodurch das Stützelement eine für die Einbauverhältnisse günstige Raumform erhalten kann.

Besonders einfach kann das Stützelement hergestellt werden, wenn es durch ein Rohr mit abgeflachten Endbereichen gebildet ist. Der zur Befestigung an der Halterung bestimmte Endbereich des Stützelementes ist mit einer Bohrung versehen und der zur Karosserie zugewandte Endbereich weist ein Langloch in Achsrichtung des Stützelementes auf. Die karosserieseitige Anbindung des Stützelementes kann mit üblichen Befestigungsmitteln erfolgen.

Das Stützelement kann zur schwingungsmäßig besseren Entkoppelung und Erhöhung des Fahrkomforts auch an seinem karosserieseitigen Ende elastisch gelagert sein. Die elastische Lagerung kann wie bei der Befestigung an der Halterung mittels elastischer Buchsen erfolgen.

Es bleibt auch im Rahmen der Erfindung, wenn die schwingungsmäßige Entkoppelung des Stützelementes mittels elastischer Buchsen nur an seinem karosserieseitigen Ende erfolgt.

Die erfindungsgemäße Lenkanordnung ermöglicht die Lenksäule und/oder die Halterung mit den Stützelementen zusammen mit dem Cockpit des Kraftfahrzeuges vorzumontieren und als eine Baueinheit sowohl manuell als auch automatisch in das Kraftfahrzeug einzubauen. Die schwenkbaren Stützelemente können dabei aus Montagegründen einfach zusammen- oder weggeklappt werden. Bei dieser Weiterbildung der Erfindung entfällt insbesondere die umständliche manuelle Befestigung der Stützelemente an der Halterung, da die Befestigungsstellen im Kraftfahrzeug schwer zugänglich sind.

Die Erfindung wird im folgenden anhand der in den Zeichnungen dargestellten Ausführungsbeispiele näher erläutert.

Teilweise schematisch zeigen:
- Fig. 1: eine Seitenansicht der Lenkanordnung mit einer Halterung der Lenksäule und daran befestigten Stützelementen;
- Fig. 2: ein Ausführungsbeispiel für die elastische Befestigung von zwei Stützelementen mittels Kunststoffbuchsen an einem in Fahrzeugquerrichtung verlaufendem Lagerelement;
- Fig. 3: eine vergrößerte Darstellung der Befestigung eines Stützelementes am Lagerelement nach Fig. 2;
- Fig. 4: eine alternative Befestigung eines Stützelementes mittels einer Gummibuchse an der Halterung;
- Fig. 5: eine perspektivische Ansicht auf die Lenkanordnung ohne Lenkrad mit Stützelementen, die sich an beiden nicht näher gezeigten A-Säulen sowie am Längstunnel des Kraftfahrzeuges abstützen;

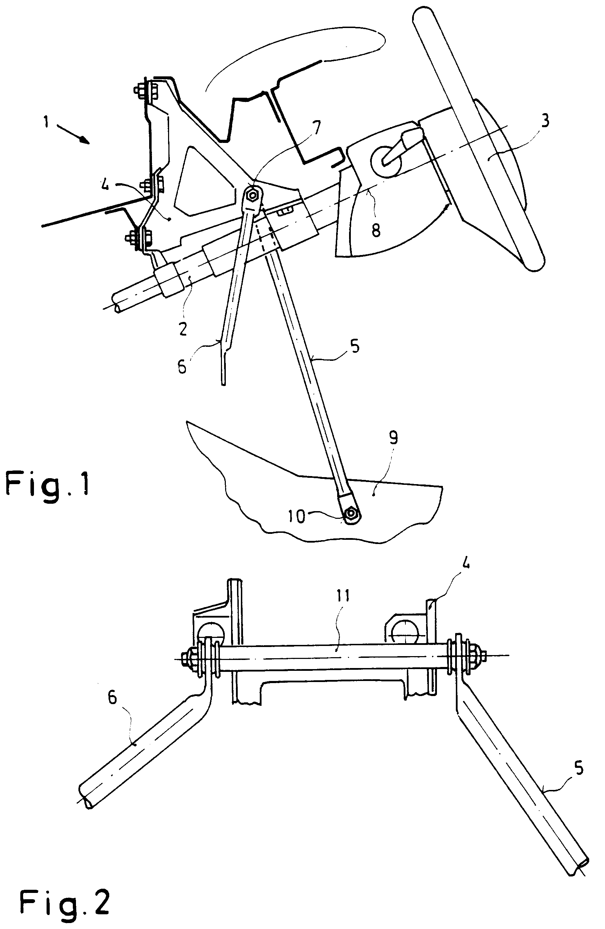

Die mit dem Vorderbau 1 des Kraftfahrzeuges verbundene Lenkanordnung nach Fig. 1 besteht aus einer Lenksäule 2 mit einem Lenkrad 3, die mittels Schrauben fest mit der Halterung 4 verbunden ist. Die Halterung 4 ist mit dem Vorderbau 1 des Kraftfahrzeuges verschraubt. Im Bereich der Befestigung der Lenksäule an der Halterung sind zwei Stützelemente 5 und 6 elastisch und um eine gemeinsame in Fahrzeugquerrichtung verlaufende Achse 7 schwenkbar gelagert. Das Stützelement 5 erstreckt sich annähernd senkrecht zu der Mittelachse 8 der Lenksäule 2 und ist mit seinem karosserieseitigen Ende am Längstunnel 9 befestigt. Das Stützelement 6 ist mit seinem karosserieseitigen Ende an einer nicht näher gezeigten A-Säule befestigt.

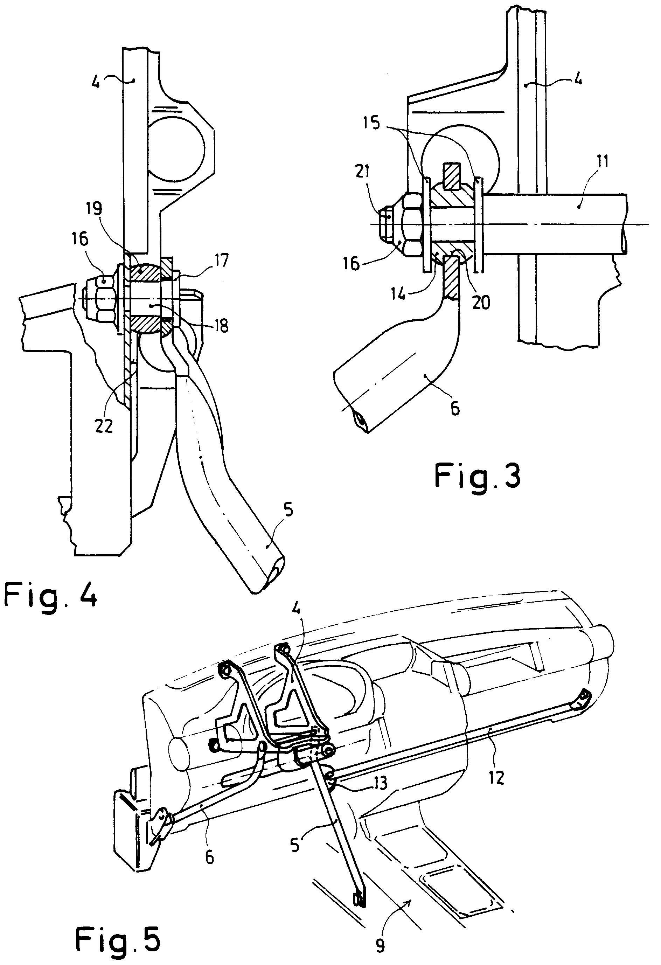

Im Ausführungsbeispiel gemäß Fig. 2 und Fig. 3 sind die beidseitig der Halterung 4 angeordneten Stützelemente 5 und 6 an einem in Fahrzeugquerrichtung angeordneten und mit der Halterung 4 verbundenen Lagerelement 11 mittels einer in eine Bohrung 20 im abgeflachten Bereich des Stützelementes 6 eingesetzten Kunststoffbuchse 14 elastisch und schwenkbar gelagert. Zur Befestigung der Stützelemente kann, wie in Fig. 3 gezeigt z. B. das Stützelement 6 unter Verwendung zweier Scheiben 15 mit einer selbstsichernden Mutter 16 am Gewindeabschnitt 21 des Lagerelementes 11 fest angezogen sein.

Die Fig. 4 zeigt eine mittels einer Gummibuchse 19 ausgeführte alternative Befestigung eines Stützelementes 5 an der Halterung 4. Die Gummibuchse 19 ist unmittelbar zwischen einer Auflagefläche 22 der Halterung 4 und dem Stützelement 5 angeordnet. Der Bolzen 17, der das Stützelement 5, die Gummibuchse 19 und die Halterung 4 durchsetzt, weist in seinem mittleren Abschnitt 18, dessen Breite etwas geringer ist als die Breite der Gummibuchse 19, einen größeren Durchmesser als die Bohrung in der Halterung 4 zur Befestigung des Stützelementes auf. Dadurch wird beim Anziehen der selbstsichernden Mutter 16 sowohl der Bolzen 17 fest mit der Halterung 4 verbunden als auch die notwendige Vorspannung der Gummibuchse 19 erreicht. Der Bolzen 17 ist dabei lösbar mit dem Stützelement 5 verbunden. Durch übliche konstruktive Mittel kann er sich in der gezeigten Lage nicht gegenüber dem Stützelement 5 verdrehen. Der Bolzen 17 kann auch mit dem Stützelement 5 verschweißt sein.

In Fig. 5 ist ein weiteres Ausführungsbeispiel gezeigt, bei dem das Stützelement 5, das einerseits elastisch mit der Halterung 4, andererseits mit dem Längstunnel 9 des Kraftfahrzeuges verbunden ist, im Bereich seiner oberen Befestigung an der Halterung 4 fest mit einer Querstrebe 12 verbunden. Die Verbindung zwischen der Querstrebe 12, die mit der Karosserie an der nicht näher gezeigten A-Säule auf der Beifahrerseite fest verbunden ist und dem Stützelement 5 erfolgt über ein Knotenblech 13, das mit dem Stützelement 5 verschweißt ist. Das Stützelement 6 ist mit der Karosserie an der nicht näher gezeigten A-Säule auf der linken Seite des Kraftfahrzeuges fest verbunden.

## Patentansprüche

1. Lenkanordnung, insbesondere für Kraftfahrzeuge, mit einer eine Lenksäule nahe des Lenkrades aufnehmenden Halterung, die mit dem Vorderbau des Kraftfahrzeuges fest verbunden ist und ein oder mehrere zumindest an der Halterung schwenkbar angeordnete und mit der Karosserie, vorzugsweise mit einer A-Säule oder einem Längstunnel verbundene, auf Druck und/oder Zug beanspruchbare Stützelemente aufweist, dadurch gekennzeichnet, daß zumindest ein schwenkbares Stützelement (5, 6) an der Halterung (4) elastisch gelagert ist.

2. Lenkanordnung nach Anspruch 1, dadurch gekennzeichnet, daß die elastische Lagerung des Stützelementes (5, 6) durch elastische Buchsen (14, 19) erfolgt.

3. Lenkanordnung nach Anspruch 1 und 2, dadurch gekennzeichnet, daß die elastischen Buchsen (19) Gummibuchsen sind.

4. Lenkanordnung nach Anspruch 1 und 2, dadurch gekennzeichnet, daß die elastischen Buchsen (14) aus einem Kunststoff bestehen.

5. Lenkanordnung nach Anspruch 1 bis 4, dadurch gekennzeichnet, daß die Schwenkachse des Stützelementes in Fahrzeuglängsrichtung verläuft.

6. Lenkanordnung nach Anspruch 1 bis 4, dadurch gekennzeichnet, daß die Schwenkachse (7) des Stützelementes (5, 6) in Fahrzeugquerrichtung verläuft.

7. Lenkanordnung nach einem der vorangehenden Ansprüche, dadurch gekennzeichnet, daß beidseitig der Halterung (4) Stützelemente (5, 6) angeordnet sind.

8. Lenkanordnung nach Anspruch 7, dadurch gekennzeichnet, daß die Stützelemente (5, 6) an einem in Fahrzeugquerrichtung angeordnetem und mit der Halterung (4) verbundenen Lagerelement (11) befestigt sind.

9. Lenkanordnung nach einem der vorangehenden Ansprüche, dadurch gekennzeichnet, daß sich die Stützelemente (5, 6) an beiden Seiten des Kraftfahrzeuges angeordneten A-Säulen sowie am Längstunnel (9) des Kraftfahrzeuges abstützen.

10. Lenkanordnung nach einem der vorangehenden Ansprüche 1 bis 4, dadurch gekennzeichnet, daß das Stützelement (5, 6) um einen Befestigungspunkt an der Halterung (4) allseitig schwenkbar ist.

11. Lenkanordnung nach einem der vorangehenden Ansprüche, dadurch gekennzeichnet, daß mindestens ein Stützelement (5) in einer Ebene annähernd senkrecht der Mittelachse (8) der Lenksäule (2) angeordnet ist.

12. Lenkanordnung nach einem der vorangehenden Ansprüche, dadurch gekennzeichnet, daß das Stützelement (5, 6) aus einem metallischen Profilstab besteht.

13. Lenkanordnung nach einem der vorangehenden Ansprüche, dadurch gekennzeichnet, daß das Stützelement (5, 6) durch ein Rohr mit abgeflachten Endbereichen gebildet ist.

14. Lenkanordnung nach einem der vorangehenden Ansprüche, dadurch gekennzeichnet, daß der zur Karosserie zugewandte Endbereich des Stützelementes (5, 6) ein Langloch in Achsrichtung des Stützelementes (5, 6) aufweist.

15. Lenkungsanordnung nach einem der vorangehenden Ansprüche, dadurch gekennzeichnet, daß zumindest ein Stützelement (5, 6) an seinem karosserieseitigen Ende elastisch gelagert ist.

16. Lenkanordnung nach einem der vorangehenden Ansprüche, dadurch gekennzeichnet, daß die Halterung (4) zusammen mit der Lenksäule (2) und mindestens einem Stützelement (5, 6) zusammen mit dem Cockpit vormontiert sind.

## Claims

1. Steering assembly, in particular for motor vehicles, with a mounting which receives a steering column near the steering wheel and which is rigidly connected to the front body of the motor vehicle and comprises one or more supporting elements which are arranged pivotably at least on the mounting and connected to the body, preferably a front pillar or a longitudinal tunnel, and which can be subjected to pressure and/or tension, characterised in that at least one pivotable supporting element (5, 6) is mounted resiliently on the mounting (4).

2. Steering assembly according to claim 1, characterised in that the resilient mounting of the supporting element (5, 6) takes place by resilient bushes (14, 19).

3. Steering assembly according to claims 1 and 2, characterised in that the resilient bushes (19) are rubber bushes.

4. Steering assembly according to claims 1 and 2, characterised in that the resilient bushes (14) are made of a plastic.

5. Steering assembly according to claims 1 to 4, characterised in that the pivot axis of the supporting element extends in the longitudinal direction of the vehicle.

6. Steering assembly according to claims 1 to 4, characterised in that the pivot axis (7) of the supporting element (5, 6) extends in the transverse direction of the vehicle.

7. Steering assembly according to any of the preceding claims, characterised in that on both sides of the mounting (4) are arranged supporting elements (5, 6).

8. Steering assembly according to claim 7, characterised in that the supporting elements (5, 6) are fixed to a bearing element (11) arranged in the transverse direction of the vehicle and connected to the mounting (4).

9. Steering assembly according to any of the preceding claims, characterised in that the supporting elements (5, 6) are supported on front pillars arranged on both sides of the vehicle as well as on the longitudinal tunnel (9) of the vehicle.

10. Steering assembly according to any of the preceding claims 1 to 4, characterised in that the supporting element (5, 6) is pivotable in all directions about a point of attachment to the mounting (4).

11. Steering assembly according to any of the preceding claims, characterised in that at least one supporting element (5) is arranged in a plane almost perpendicularly to the centre axis (8) of the steering column (2).

12. Steering assembly according to any of the preceding claims, characterised in that the supporting element (5, 6) consists of a metal profile rod.

13. Steering assembly according to any of the preceding claims, characterised in that the supporting element (5, 6) is formed by a tube with flattened end regions.

14. Steering assembly according to any of the preceding claims, characterised in that the end region of the supporting element (5, 6) facing towards the body comprises an oblong hole in the axial direction of the supporting element (5, 6).

15. Steering assembly according to any of the preceding claims, characterised in that at least one supporting element (5, 6) is mounted resiliently at its end on the body side.

16. Steering assembly according to any of the preceding claims, characterised in that the mounting (4) together with the steering column (2) and at least one supporting element (5, 6) together with the cockpit are preassembled.

## Revendications

1. Système de direction, destiné notamment à des véhicules automobiles, avec un support qui reçoit la colonne de direction au voisinage du volant, est lié fermement à l'avant-corps du véhicule et présente un ou plusieurs élément(s) d'appui sollicité(s) en traction et/ou en compression qui est (sont) lié(s) à la carrosserie, de préférence à la colonne A ou à un tunnel longitudinal, caractérisé par le fait qu'au moins un élément d'appui (5, 6) pivotant est monté élastiquement sur le support (4).

2. Système de direction selon la revendication 1, caractérisé par le fait que le montage élastique de l'élément d'appui (5, 6) est réalisé au moyen de douilles (14, 19) élastiques.

3. Système de direction selon les revendications 1 et 2, caractérisé par le fait que les douilles (19) élastiques sont des douilles en caoutchouc.

4. Système de direction selon les revendications 1 et 2, caractérisé par le fait que les douilles (14) élastiques sont des douilles en matériau synthétique.

5. Système de direction selon les revendications 1 à 4, caractérisé par le fait que l'axe de pivotement de l'élément d'appui s'étend dans la direction longitudinale du véhicule.

6. Système de direction selon les revendications 1 à 4, caractérisé par le fait que l'axe de pivotement (7) de l'élément d'appui (5, 6) s'étend dans la direction transversale du véhicule.

7. Système de direction selon l'une des revendications précédentes, caractérisé par le fait que des éléments d'appui (5, 6) sont disposés de part et d'autre du support (4).

8. Système de direction selon la revendication 7, caractérisé par le fait que les éléments d'appui (5, 6) sont fixés à un élément (11) formant palier qui est disposé dans la direction transversale du véhicule et est lié au support (4).

9. Système de direction selon l'une des revendications précédentes, caractérisé par le fait que les éléments d'appui (5, 6) prennent appui sur les colonnes A, de chaque côté du véhicule ainsi que sur le tunnel longitudinal du véhicule.

10. Système de direction selon l'une des revendications 1 à 4, caractérisé par le fait que l'élément d'appui (5, 6) peut pivoter dans toutes les directions autour d'un point de fixation au support (4).

11. Système de direction selon l'une des revendications précédentes, caractérisé par le fait qu'au moins un élément d'appui (5) est disposé dans un plan qui est sensiblement perpendiculaire à l'axe médian (8) de la colonne de direction (2).

12. Système de direction selon l'une des revendications précédentes, caractérisé par le fait que l'élément d'appui (5, 6) est formé d'une barre métallique profilée.

13. Système de direction selon l'une des revendications précédentes, caractérisé par le fait que l'élément d'appui (5, 6) est formé d'un tube dont les parties terminales sont aplaties.

14. Système de direction selon l'une des revendications précédentes, caractérisé par le fait que l'extrémité tournée vers la carrosserie de l'élément d'appui (5, 6) comporte un trou oblong dans la direction axiale dudit élément d'appui (5, 6).

15. Système de direction selon l'une des revendications précédentes, caractérisé par le fait qu'au moins un élément d'appui (5, 6) est monté élastiquement à son extrémité côté carrosserie.

16. Système de direction selon l'une des revendications précédentes, caractérisé par le fait que le support (4), la colonne de direction (2) et au moins un élément d'appui (5, 6) sont préassemblés avec le poste de conduite.
